# EUROPÄISCHE PATENTSCHRIFT

(11) **EP 2 444 698 B1**
(45) Veröffentlichungstag und Bekanntmachung des Hinweises auf die Patenterteilung: **08.04.2015**
(21) Anmeldenummer: 11185652.2
(22) Anmeldetag: 18.10.2011
(51) Int. Cl.: F16J 3/04, F16D 65/14

(54) **Scheibenbremse**
Disc brake
Frein à disque

(30) Priorität: 22.10.2010 DE 102010049305
(43) Veröffentlichungstag der Anmeldung: 25.04.2012
(73) Patentinhaber: KNORR-BREMSE Systeme für Nutzfahrzeuge GmbH, 80809 München (DE)
(72) Erfinder: Asen, Alexander, 94474 Vilshofen (DE)
(74) Vertreter: Mattusch, Gundula

(56) Entgegenhaltungen:
- EP-A1- 0 565 997
- EP-A1- 2 489 897
- EP-A2- 2 199 639
- WO-A1-2004/102024
- WO-A2-2009/074222

## Beschreibung

Die Erfindung betrifft eine Scheibenbremse nach dem Oberbegriff des Anspruchs 1.

Eine gattungsgemäße Scheibenbremse ist sowohl aus der WO 2009/074222 A2 wie auch aus der WO 2004/102024 A1 bekannt

Zum Schutz von in einem Aufnahmeraum des Bremssattels angeordneten funktionsrelevanten Bauteilen, wie einer Zuspanneinrichtung oder dergleichen, vor Korrosion durch Witterungseinflüsse, ist der Aufnahmeraum durch einen Verschlussdeckel weitgehend verschlossen, und zwar auf der Seite, die bei einer Schiebesattelbremse dem zuspannseitigen Bremsbelag zugeordnet ist.

Mit Hilfe der Zuspanneinrichtung gegen den Bremsbelag drückbare Stellspindeln sind durch den Verschlussdeckel geführt, wozu dieser Öffnungen aufweist, die umfänglich durch einen axial ausgerichteten Kragen begrenzt sind.

Der jeweilige Durchtrittsbereich der Stellspindel ist durch einen Faltenbalg abgedichtet, der einerseits an der Stellspindel und andererseits am Verschlussdeckel befestig ist, wobei ein Endbereich des Faltenbalges ausschließlich reibschlüssig an der Innenseite des Kragens anliegt.

Um diesen Reibschluss herstellen zu können, sind jedoch bestimmte Voraussetzungen zu erfüllen. Hierzu zählen insbesondere sehr enge Toleranzen, vor allem des lichten Durchmessers des Kragens, sowie dessen Oberflächenbeschaffenheit. Aber auch eine genau runde Außenkontur des Faltenbalges im Verbindungsbereich mit dem Verschlussdeckel ist zwingend, da nur so ein halbwegs sicherer Presssitz zu erreichen ist.

Da der Faltenbalg insgesamt aufgrund der Relativbewegung zwischen dem Verschlussdeckel und der Stellspindel aus einem elastischen, d.h. deformierbaren Material besteht, ist im Verbindungsbereich mit dem Verschlussdeckel in den anliegenden Endbereich des Faltenbalgs ein Versteifungsring aus einer üblicherweise metallischen Einlage eingearbeitet, bevorzugt durch Umspritzen, wenn der Faltenbalg insgesamt aus Kunststoff hergestellt ist.

Aus der nachveröffentlichten EP 2 489 897 A1 ist eine Scheibenbremse bekannt, bei der der Versteifungsring an einem formstabilen, im Aufnahmeraum angeordneten Haltering befestigt ist. Dieser ist durch Anspritzen stoffschlüssig mit dem Kragen verbunden.

Trotz des notwendigerweise betriebenen Aufwands hinsichtlich der genannten engen Durchmessertoleranzen, der Oberflächenbeschaffenheit der Anlageseite des Kragens sowie der genau runden Kontur des Faltenbalges, besteht die Gefahr, dass die reibschlüssige Verbindung zwischen dem Faltenbalg und dem Verschlussdeckel durch die Relativbewegung der Stellspindel so weit gelöst wird, dass der Faltenbalg aus dem Kragen des Verschlussdeckels herauswandert, so dass eine dauerhaft angestrebte Dichtwirkung nicht gewährleistet ist.

Daneben sind aufgrund der erforderlichen engen Toleranzen entsprechend aufwändige Fertigungsmaßnahmen erforderlich, die zu relativ hohen Fertigungskosten insgesamt führen.

Der Erfindung liegt die Aufgabe zugrunde, eine Scheibenbremse der gattungsgemäßen Art so weiterzuentwickeln, dass ihre Betriebssicherheit verbessert, die Standzeit erhöht und die Fertigungskosten gesenkt werden.

Diese Aufgabe wird durch eine Scheibenbremse mit den Merkmalen des Anspruchs 1 gelöst.

Die Erfindung erzielt eine ganze Reihe von Vorteilen gegenüber dem Stand der Technik.

Zunächst ist der verbesserte Halt des Faltenbalges im Verschlussdeckel zu nennen, der dazu führt, dass ein Verrutschen oder gar Lösen des Faltenbalgs aus seinem Sitz mit dem Verschlussdeckel ausgeschlossen ist.

Naturgemäß erhöht dies die Betriebssicherheit ebenso wie die Standzeit der Scheibenbremse, da der Aufnahmeraum dauerhaft, also über die gesamte Betriebszeit der Scheibenbremse, abgedichtet ist, so dass weder Schmutz noch Feuchtigkeit in den Aufnahmeraum dringen können, was die darin befindlichen Funktionsteile in Mitleidenschaft ziehen würde.

Die verbesserte Funktions- bzw. Betriebssicherheit führt letztendlich zu einer Betriebskostenoptimierung, zumindest aber zu einer Betriebskostenreduzierung.

Darüber hinaus ergeben sich durch die neue Konstruktion verminderte Fertigungskosten, da weder für den Faltenbalg im Anbindungsbereich am Verschlussdeckel, noch an der zugeordneten Anlagefläche des Kragens, besonders enge Toleranzen eingehalten werden müssen bzw. der Faltenbalg durchaus in gewissem Maße unrund sein kann.

Zwar ist als zusätzliches Bauteil der formstabile Haltering vorgesehen, jedoch kann dieser aus Kunststoff im Spritzgussverfahren hergestellt sein, was mit sehr geringen Herstellungskosten möglich ist.

Prinzipiell wird durch die Erfindung der Faltenbalg lediglich mittelbar am Verschlussdeckel befestigt, da der Haltering, an den der Faltenbalg mit seinem Versteifungsring angeschlossen ist, zumindest axial gesichert am Verschlussdeckel befestigt ist.

Nach einem weiteren Gedanken der Erfindung liegt der Haltering dichtend an der Stellspindel an, wozu eine Dichtlippe am Haltering angeformt ist, die sich an der Mantelfläche der Stellspindel abstützt.

Die Befestigung des Halteringes am Verschlussdeckel bzw. an dessen Kragen erfolgt formschlüssig, wobei der Kragen und der Haltering miteinander korrespondierende Formschlussteile aufweisen, die aus Schnapphaken und einer Nut bestehen, in die die Schnapphaken eingreifen.

Bevorzugt sind die Schnapphaken an der Außenseite des Kragens angeformt, während die Nut umlaufend im Haltering vorgesehen ist.

Auch der Faltenbalg ist nach einem weiteren Gedanken der Erfindung formschlüssig mit dem Haltering verbunden. Dabei weist der Versteifungsring, der über das ihn umgebende elastische Material axial vorsteht, einen nach außen gerichteten, umlaufenden radialen Haltewinkel auf, der sich an einer Hinterschneidung des Haltewinkels abstützt.

Da die Schnapphaken auf der äußeren Mantelfläche des Kragens angeordnet sind, wobei sie in vorteilhafter Weise beim Stanzen des Verschlussdeckels mit eingebracht werden, wird eine Berührung der innenseitig am Kragen anliegenden Dichtfläche des Faltenbalgs im Sinne eines Anpressens vermieden, so dass eine Beschädigung des Faltenbalgs bei dessen Montage ausgeschlossen ist.

Im Gegensatz zum Stand der Technik, in dem der Kragen neben seiner Dichtauch Haltefunktion übernimmt, wird gemäß der Erfindung die Halterung ausschließlich durch den Haltering gebildet, wobei sich dieser und der Faltenbalg gegenseitig in Position halten.

Die einfache Formgebung des Kragens, bei der auf eine kompliziert zu formenden Sickenverlauf verzichtet werden kann, ermöglicht eine Herstellung des Verschlussdeckels mit relativ einfachen, kostengünstig herstellbaren Werkzeugen.

Dies betrifft gleichermaßen die Modifikation des Faltenbalges, bei dem prinzipiell auf eine Versteifung des Anlagebereiches an der Stellspindel verzichtet werden kann, wie sie bislang durch Einbringen eines Verstärkungsringes erforderlich war, wenn, wie ein weiterer Gedanke der Erfindung vorsieht, der Haltering dichtend an der Stellspindel anliegt. Vorzugsweise ist hierzu am Haltering eine aus einem Dichtmaterial, beispielsweise Gummi, bestehende Haltelippe angeordnet, die an den Haltering im Übrigen, der aus einem formstabilen Kunststoff besteht, anvulkanisiert sein kann.

Die genannte kostengünstige Herstellung des Verschlussdeckels wird noch dadurch optimiert, dass Formtoleranzen des Kragens in einem breiteren Feld als bislang akzeptabel sind.

Weitere vorteilhafte Ausbildungen sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer Scheibenbremse in einer geschnittenen Draufsicht
- Figur 2: eine Einzelheit der Scheibenbremse in einer vergrößerten geschnittenen Seitenansicht.

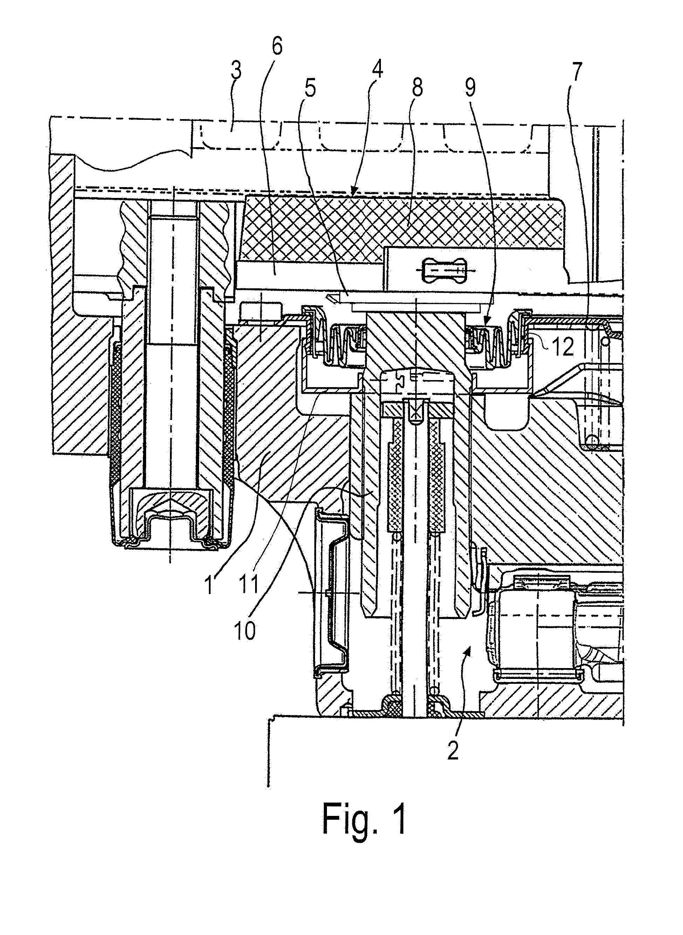

In der Figur 1 ist eine Hälfte einer Scheibenbremse dargestellt, die einen als Schiebesattel ausgebildeten Bremssattel 1 aufweist, der eine Bremsscheibe 3 in ihrem oberen Umfangsbereich umfasst. Dabei kann die Scheibenbremse pneumatisch oder elektromotorisch betätigbar sein.

Zu beiden Seiten der Bremsscheibe 3 sind Bremsbeläge 4 angeordnet, von denen hier einer aktionsseitig dargestellt ist, die im Funktionsfall gegen die Bremsscheibe 3 pressbar ist.

Der Bremsbelag 4 besteht aus einer Trägerplatte 6 und einem auf dessen der Bremsscheibe 3 zugewandten Seite befestigten Reibbelag 8.

Über eine in einem Aufnahmeraum des Bremssattels 1 angeordnete, mittels eines Drehhebels betätigbare Zuspanneinrichtung 2 wird eine Stellspindel 10 über ein angeschlossenes Druckstück 5 gegen den Bremsbelag 4 gedrückt. Anstelle der stirnseitigen Anbindung des Druckstücks 5 an der Stellspindel 10 kann das Druckstück 5 auch fest mit der Trägerplatte 6 verbunden sein.

Zur Einstellung eines Lüftspiels zwischen dem Reibbelag 8 und der Bremsscheibe 3, unter Berücksichtigung des Verschleißes des Reibbelages 8, ist die als Gewindespindel ausgebildete Stellspindel 10 drehbar im Bremssattel gelagert und über eine nicht dargestellte Nachstelleinrichtung bewegbar.

Der Bremssattel 1 ist auf seiner der Bremsscheibe 3 zugewandten Seite weitgehend durch einen Verschlussdeckel 7 verschlossen, der im Austrittsbereich der Stellspindel 10 eine durch einen Kragen 12 begrenzte Öffnung aufweist.

Zur Abdichtung der Öffnung ist ein am Kragen anliegender Faltenbalg 9 vorgesehen, der in dem dem Kragen 12 zugewandten Randbereich einen eingebetteten Versteifungsring 15 aufweist. Das andere Ende des Faltenbalges 9 liegt an der Stellspindel 10 an.

Erfindungsgemäß ist der Versteifungsring 15 an einem formstabilen, im Aufnahmeraum angeordneten Haltering 11 befestigt, der formschlüssig mit dem Kragen 12 verbunden ist.

Hierzu weist der Kragen 12 vorzugsweise gleichmäßig über den Umfang verteilte Schnapphaken 12 auf, die in eine umlaufende Nut 14 des Halteringes 11 eingreifen.

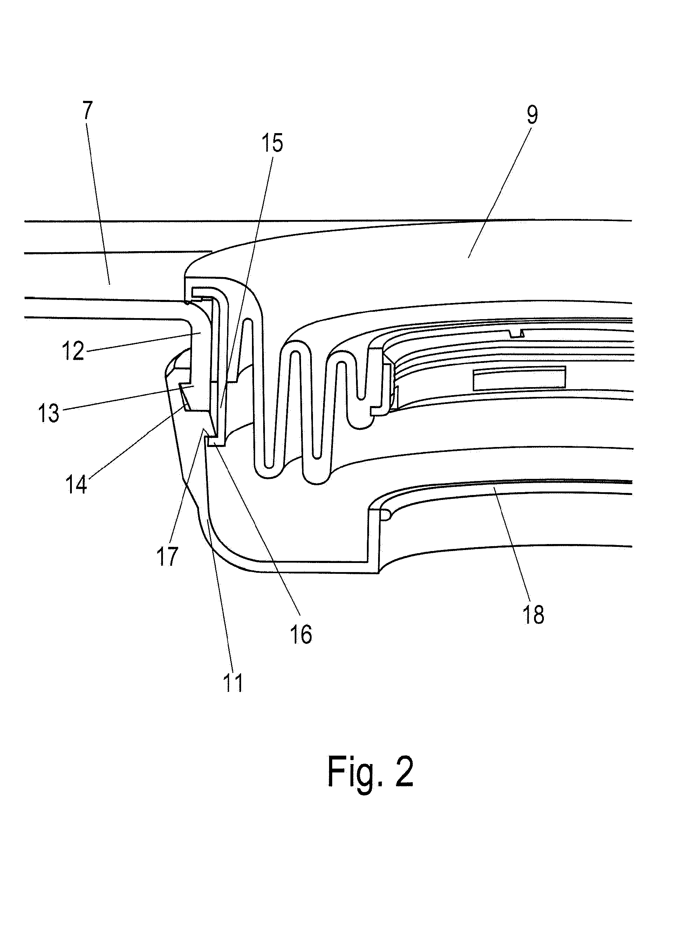

Wie insbesondere die Figur 2 sehr deutlich zeigt, ist der Haltering 11 auf den Kragen 12 aufgepresst, wobei zur einfacheren Montage die Schnapphaken 13 entgegen der Aufschubrichtung des Halteringes 11 sich konisch verjüngen, so dass der zwar formstabile, jedoch insoweit elastische Haltering 11 beim Aufschieben auf den Kragen 12 entsprechend aufgebogen wird und die Schnapphaken 13 in einer Endstellung in die Nut 14 einrasten.

Zur Befestigung des Versteifungsringes 15 am Haltering 11, die ebenfalls formschlüssig erfolgt, ist der Versteifungsring 15, der in axialer Richtung über das ihn im Übrigen umschließende Dichtungsmaterial des Faltenbalges 9 vorsteht, als radial nach außen gerichteter Haltewinkel 16 ausgebildet, der in montierter Stellung, wie sie in der Figur 2 gezeigt ist, eine hinterschnittene Schulter 17 des Halteringes 11 hintergreift.

Zur einfacheren Montage weist der Haltering 11 oberhalb der Schulter 17 eine Einführschräge auf.

Zur Abdichtung des Systems ist der Haltering 11 mit einer Dichtlippe 18 versehen, die dichtend an der Stellspindel 10 anliegt, wobei die Dichtlippe 18 aus einem elastischen Dichtmaterial, vorzugsweise Gummi, besteht.

### Bezugszeichenliste

- 1: Bremssattel
- 2: Zuspanneinrichtung
- 3: Bremsscheibe
- 4: Bremsbelag
- 5: Druckstück
- 6: Trägerplatte
- 7: Verschlussdeckel
- 8: Reibbelag
- 9: Faltenbalg
- 10: Stellspindel
- 11: Haltering
- 12: Kragen
- 13: Schnapphaken
- 14: Nut
- 15: Verstärkungsring
- 16: Haltewinkel
- 17: Schulter
- 18: Dichtlippe

## Patentansprüche

1. Scheibenbremse, mit einem Bremssattel (1), in dem zwei in Funktion gegen eine Bremsscheibe (3) pressbare Bremsbeläge (4) angeordnet sind, von denen ein aktionsseitiger über mindestens eine Stellspindel (10) mittels einer Zuspanneinrichtung (2) betätigbar ist, wobei die Stellspindel (10) durch eine durch einen Kragen (12) begrenzte Öffnung eines Verschlussdeckels (7) geführt ist, der einen Aufnahmeraum des Bremssattels (1) verschließt, und an der zur Abdichtung ein Faltenbalg (9) anliegt, ebenso wie andererseits mit einem einen Versteifungsring (15) aufweisenden Randbereich am Kragen (12), **dadurch gekennzeichnet, dass** der Versteifungsring (15) an einem formstabilen, im Aufnahmeraum angeordneten, mit dem Kragen (12) formschlüssig verbundenen Haltering (11) befestigt ist.

2. Scheibenbremse nach Anspruch 1, **dadurch gekennzeichnet, dass** der Haltering (11) dichtend an der Stellspindel (10) anliegt.

3. Scheibenbremse nach Anspruch 1 oder 2, **dadurch gekennzeichnet, dass** der Haltering (11) im Anlagebereich an der Stellspindel (10) eine Dichtlippe (18) aufweist.

4. Scheibenbremse nach einem der vorhergehenden Ansprüche, **dadurch** gekennzeichnet, dass der Kragen (12) mindestens einen, vorzugsweise mehrere, über den Umfang verteilte Schnapphaken (13) aufweist, die in eine umlaufende Nut (14) des Halteringes (11) eingreifen.

5. Scheibenbremse nach Anspruch 4, dadurch **gekennzeichnet, dass** der Schnapphaken (13) entgegen der Aufschubrichtung des Halteringes (11) eine Einlaufschräge aufweist.

6. Scheibenbremse nach einem der vorhergehenden Ansprüche, dadurch **gekennzeichnet, dass** der Versteifungsring (15) in axialer Richtung formschlüssig gesichert am Haltering (11) gehalten ist.

7. Scheibenbremse nach einem der vorhergehenden Ansprüche, dadurch **gekennzeichnet, dass** der Versteifungsring (15) einen vom Material des Faltenbalges (9) freien Endbereich aufweist, an den ein radial sich nach außen erstreckender Haltewinkel (16), vorzugsweise umlaufend, angeformt ist, der eine hinterschnittene Schulter (17) des Halteringes (11) hintergreift.

8. Scheibenbremse nach Anspruch 7, dadurch **gekennzeichnet, dass** die Schulter (17) sich in Einschubrichtung des Halteringes (11) in eine Einlaufschräge fortsetzt.

9. Scheibenbremse nach einem der vorhergehenden Ansprüche, dadurch **gekennzeichnet, dass** der Haltering (11) aus einem Kunststoff besteht.

10. Scheibenbremse nach einem der vorhergehenden Ansprüche, dadurch **gekennzeichnet, dass** der Haltering (11) auf den Kragen (12) und den Versteifungsring (15) aufgeschoben ist.

## Claims

1. Disc brake, with a brake calliper (1), in which two brake linings (4) are arranged which can be pressed during operation against a brake disc (3), of which brake linings (4) an activation-side brake lining can be activated via at least one adjusting spindle (10) by means of an application means (2), wherein the adjusting spindle (10) is guided through an opening, defined by a collar (12), of a closure cover (7) which closes a receiving area of the brake calliper (1), and against which a bellows (9) lies for sealing purposes, and also with an edge region on the collar (12) having a reinforcing ring (15), **characterised in that** the reinforcing ring (15) is fixed to a form-stable retaining ring (11) arranged in the receiving area and connected in a positive-locking manner to the collar (12).

2. Disc brake according to claim 1, **characterised in that** the retaining ring (11) lies in a sealing manner against the adjusting spindle (10).

3. Disc brake according to claim 1 or 2, **characterised in that** the retaining ring (11) has a sealing lip (18) in the abutment region against the adjusting spindle (10).

4. Disc brake according to one of the preceding claims, **characterised in that** the collar (12) has at least one, preferably a plurality of, snap hook(s) (13) distributed around the periphery and engaging in a peripheral groove (14) of the retaining ring (11).

5. Disc brake according to claim 4, **characterised in that** the snap hook (13) has a slanted entry counter to the displacement direction of the retaining ring (11).

6. Disc brake according to one of the preceding claims, **characterised in that** the reinforcing ring (15) is held in the axial direction in a positive-locking manner secured against the retaining ring (11).

7. Disc brake according to one of the preceding claims, **characterised in that** the reinforcing ring (15) has an end region free from the material of the bellows (9), on which a radially outwardly extending retaining bracket (16), preferably peripheral, is formed which engages behind an undercut shoulder (17) of the retaining ring (11).

8. Disc brake according to claim 7, **characterised in that** the shoulder (17) continues in the displacement direction of the retaining ring (11) into a slanted entry.

9. Disc brake according to one of the preceding claims, **characterised in that** the retaining ring (11) is made from a plastic material.

10. Disc brake according to one of the preceding claims, **characterised in that** the retaining ring (11) is displaced onto the collar (12) and the reinforcing ring (15).

## Revendications

1. Frein à disque comprenant un étrier de frein (1), dans lequel deux garnitures de frein (4) sont disposées, qui sont aptes à être pressé contre un disque de frein (3) en fonctionnement, dont une, du côté d'actionnement, est commandable via au moins une broche de réglage (10) moyennant un dispositif de serrage (2), à ladite broche de réglage (10) étant passée par une ouverture d'un couvercle de fermeture (7), qui est définie par un collier (12), ce couvercle fermant un espace de réception dudit étrier de frein (1), et à un soufflet (9) portant contre ladite broche afin d'assurer l'étanchéité, et comprenant également, d'autre côté, une zone marginale audit collier (12), qui est munie d'un anneau raidisseur (15), **caractérisé en ce que** ledit anneau raidisseur (15) est fixé à un anneau de retenue indéformable (11), qui est relié en forme audit collier (12) et disposé dans ledit espace de réception.

2. Frein à disque selon la revendication 1, **caractérisé en ce que** ledit anneau de retenue (11) porte contre ladite broche de réglage (10), en assurant l'étanchéité.

3. Frein à disque selon la revendication 1 ou 2, **caractérisé en ce que** ledit anneau de retenue (11) présente une lèvre d'étanchéité (18) dans la zone d'appui à ladite broche de réglage (10).

4. Frein à disque selon une quelconque des revendications précédentes, **caractérisé en ce que** ledit collier (12) comprend au moins un crochet d'encliquetage (13) - de préférence une pluralité des croches d'encliquetage (13) distribués autour la périphérie - qui s'engagent dans une rainure (14) périphérique dudit bague de retenue (11).

5. Frein à disque selon la revendication 4, **caractérisé en ce que** ledit crochet d'encliquetage (13) présente une pente d'introduction en opposition à la direction d'enfilage dudit bague de retenue (11).

6. Frein à disque selon une quelconque des revendications précédentes, **caractérisé en ce que** ledit anneau raidisseur (15) est retenu, en forme, en sens axial, audit bague de retenue, en étant arrêté.

7. Frein à disque selon une quelconque des revendications précédentes, **caractérisé en ce que** ledit anneau raidisseur (15) présente une zone terminale libre du matériau dudit soufflet (9), auquel est moulé un angle de retenue (16) s'étendant radialement vers l'extérieur, de préférence de façon périphérique, qui s'engage derrière une épaule moulée en contre-dépouille (17) dudit bague de retenue (11).

8. Frein à disque selon la revendication 7, **caractérisé en ce que** ladite épaule (17) se poursuit en sens d'insertion dudit bague de retenue (11) en une pente d'introduction.

9. Frein à disque selon une quelconque des revendications précédentes, **caractérisé en ce que** ledit bague de retenue (11) est fait en une matière synthétique.

10. Frein à disque selon une quelconque des revendications précédentes, **caractérisé en ce que** ledit bague de retenue (11) est poussé sur ledit collier (12) et ledit anneau raidisseur (15).
